# FASCICULE DE BREVET EUROPEEN

(11) **EP 2 850 420 B1**
(45) Date de publication et mention de la délivrance du brevet: **06.11.2019**
(21) Numéro de dépôt: 13724209.5
(22) Date de dépôt: 13.05.2013
(51) Int. Cl.: G01N 27/22

(54) **PROCÉDÉ DE RÉALISATION D'UN CAPTEUR CAPACITIF**
VERFAHREN ZUR HERSTELLUNG EINES KAPAZITIVEN SENSORS
METHOD FOR PRODUCING A CAPACITIVE SENSOR

(30) Priorité: 15.05.2012 FR 1254464
(43) Date de publication de la demande: 25.03.2015
(73) Titulaire: Commissariat à l'Énergie Atomique et aux Énergies Alternatives, 75015 Paris (FR)
(72) Inventeur: GRANGE, Hubert, 38100 Grenoble (FR); DANEL, Jean-Sébastien, 38130 Echirolles (FR); GAILLARD, Frédéric-Xavier, 38500 Voiron (FR)
(74) Mandataire: Brevalex
(86) Numéro de dépôt international: PCT/EP2013/059775
(87) Numéro de publication internationale: WO 2013/171144

(56) Documents cités:
- WO-A1-2007/057794
- WO-A1-2010/006877
- WO-A1-2010/083902
- DE-A1- 10 246 050
- DE-A1-102006 019 534
- US-A1- 2004 040 378
- US-A1- 2010 307 238
- US-A1- 2011 316 054
- YAMANA M ET AL: "Porous silicon oxide layer formation by the electrochemical treatment of a porous silicon layer", JOURNAL OF THE ELECTROCHEMICAL SOCIETY, ELECTROCHEMICAL SOCIETY, MANCHESTER, NEW HAMPSHIRE; US, vol. 137, no. 9, 1 septembre 1990 (1990-09-01), pages 2925-2927, XP009112707, ISSN: 0013-4651

## Description

### DOMAINE TECHNIQUE

L'invention se rapporte au domaine des capteurs capacitifs dotés d'un matériau poreux, et s'applique à la détection de fluide et en particulier aux capteurs de gaz et/ou d'humidité.

Elle concerne un procédé de réalisation d'un dispositif capteur capacitif à matériau poreux.

### ÉTAT DE LA TECHNIQUE ANTÉRIEURE

Un capteur capacitif est généralement formé d'électrodes disposées de part et d'autre d'une couche de matériau diélectrique.

Certains capteurs capacitifs tels que les capteurs de gaz et/ou d'humidité intègrent un matériau poreux, et ont une capacité susceptible de varier en fonction d'une quantité de gaz ou de liquide adsorbée par ce matériau.

Le document « A novel surface-micromachined capacitive porous silicon humidity sensor », Z.M. Rittersma et al., Sensors and Actuators B 68 (2000) 210-217 divulgue par exemple un capteur capacitif doté d'électrodes métalliques sous forme de peignes interdigités ou d'une grille et comportant une couche de matériau semi-conducteur poreux.

Le document "Measurement of gas Moisture in the ppm range using porous silicon and porous alumina sensors", Tarikul Islam et al., Sensors and Materials, Vol.16, N°7(2004) 345-356, divulgue quant à lui un capteur capacitif avec des électrodes déposées en surface d'une couche de Si nano-poreux dans lequel le diamètre de pores est de l'ordre de 1 nm à 3 nm.

Le document WO 2010/006877 présente un capteur capacitif à diélectrique poreux pour la détection de faibles niveaux d'humidité, en particulier inférieur à 20 % HR, intégrant une couche de matériau diélectrique hydrophile nano-poreux à forte porosité ouverte disposée entre des électrodes. L'épaisseur du matériau diélectrique poreux est relativement faible, ce qui peut avoir tendance à limiter la sensibilité du capteur. La réalisation d'une couche de matériau diélectrique poreux épaisse, en particulier supérieure à 2 micomètres nécessite de réaliser plusieurs dépôts.

Le document DE 102 46 050 A1 présente une réalisation d'un capteur d'humidité à matériau poreux obtenu par porosification d'un support.

Les documents US2004/0040378 A1 et WO2007/057794 A1 décrivent d'autres exemples de capteurs d'humidité.

Il se pose le problème de trouver un procédé amélioré de réalisation d'un capteur capacitif intégrant un matériau poreux, et notamment d'un capteur destiné à une détection d'un gaz et/ou d'humidité et/ou à une mesure d'une quantité de gaz et/ou d'humidité.

### EXPOSÉ DE L'INVENTION

La présente invention prévoit la réalisation d'un capteur capacitif, comprenant des étapes de :
- formation dans un support de plusieurs tranchées distinctes séparées entre elles, puis
- formation d'un matériau poreux par porosification des parois et du fond desdites tranchées,
- remplissage des tranchées à l'aide d'un matériau conducteur.

Ainsi, on réalise les tranchées dans le matériau du support qui de préférence n'est pas poreux.

Puis, on rend poreux le matériau du support une fois avoir réalisé les tranchées.

Les tranchées sont réalisées par gravure du support.

En réalisant les étapes de gravure des tranchées et de porosification dans cet ordre, on définit des tranchées plus précisément que si l'on venait à former des tranchées dans un matériau poreux.

En effectuant les étapes de gravure des tranchées et de porosification dans cet ordre, on réduit également les possibilités d'endommagement des pores, ce qui permet d'obtenir un matériau poreux de meilleure qualité et au final de mettre en œuvre un capteur de sensibilité améliorée.

Les étapes de gravure des tranchées et de porosification sont également mises en œuvre dans cet ordre, afin d'éviter de contaminer les pores dudit matériau poreux avec un produit utilisé pour réaliser les tranchées.

Le remplissage des tranchées par du matériau conducteur peut être total ou éventuellement partiel et effectué de manière à tapisser le fond et les parois des tranchées rendues poreuses.

Ainsi, l'étape de remplissage permet de former des électrodes à base dudit matériau conducteur qui sont entourées de matériau poreux et peuvent être isolées du support par l'intermédiaire du matériau poreux.

Le support peut être un substrat, tel qu'un substrat massif à base de semi-conducteur, en particulier à base de silicium.

La mise en œuvre d'un tel capteur sur un substrat massif est moins couteuse et moins complexe à mettre en œuvre que sur un substrat SOI (SOI pour « Silicon on Insulator » ou silicium sur isolant). Par ailleurs, l'isolation peut être assurée par le matériau poreux et réalisée sans qu'une couche d'oxyde enterrée soit nécessaire.

Le support peut être formé d'un empilement de plusieurs couches.

Le matériau poreux peut être avantageusement formé à partir du matériau du substrat, par exemple à base de silicium rendu poreux.

Le matériau poreux peut également comprendre ou être formé d'un matériau diélectrique poreux.

Après porosification des tranchées et préalablement à leur remplissage par un matériau conducteur, un matériau diélectrique tel que du MSQ ou un autre matériau isolant présentant par exemple des pores de tailles inférieures au micron peut être formé sur ledit matériau poreux obtenu par porosification.

Le matériau poreux formé par porosification peut être un matériau nano-poreux c'est-à-dire doté de pores de dimension ou de diamètre de l'ordre du nanomètre.

Le matériau poreux formé par porosification peut être prévu avec des pores de faible diamètre, compris par exemple entre 2 nm et 100 nm.

Le matériau poreux formé par porosification peut être également réalisé avec une porosité ouverte supérieure à 30 %.

Cela permet d'obtenir une surface développée importante et de fixer un nombre important de molécules, en particulier de molécules d'eau lorsque le capteur capacitif est un capteur d'humidité.

Selon une possibilité de mise en œuvre du procédé, un traitement pour rendre hydrophile le matériau poreux peut être prévu.

En effectuant un tel traitement, par exemple par oxydation du matériau poreux, le caractère hydrophile de ce dernier peut être augmenté.

La mise en œuvre de sites hydrophiles peut être en particulier réalisée pour une application du capteur capacitif comme capteur d'humidité.

Le capteur d'humidité mis en œuvre peut être alors en particulier adapté pour une détection de taux d'humidité faible, par exemple entre 0 % HR et 20 % HR, ou entre 0 et 10 % HR.

Avantageusement, une fonctionnalisation du matériau poreux peut être également prévue.

Le matériau poreux peut être fonctionnalisé, et subir une fonctionnalisation de la surface des pores par un ou plusieurs composés spécifiques permettant l'adsorption de gaz déterminés, notamment lorsque le capteur capacitif est un capteur de gaz, en particulier adapté pour une détection de très faibles niveaux de quantité de gaz.

L'ordre des étapes de réalisation des tranchées par gravure et de porosification est d'autant plus important lorsque l'on réalise ultérieurement une fonctionnalisation du matériau poreux et/ou un traitement consistant à rendre hydrophile ce matériau poreux.

En effet, la mise en œuvre de telles étapes, requiert de réduire au maximum les contaminants (tels que par exemple des résidus de produit(s) utilisés pour réaliser les tranchées) sur la surface du matériau poreux et dans les pores.

Les tranchées peuvent être alors réalisées à travers un masquage de protection permettant de protéger des zones du support de l'étape de porosification.

Le procédé peut comprendre en outre, après l'étape de remplissage, le retrait de zones dudit matériau conducteur dépassant de l'embouchure des tranchées en se servant du masquage de protection comme couche d'arrêt à la planarisation.

L'invention prévoit également un capteur de type capacitif mis en œuvre à l'aide d'un procédé tel que défini plus haut et formé sur un support comportant : au moins un matériau poreux donné disposé entre au moins une première électrode et une deuxième électrode, ainsi qu'entre au moins une des électrodes et le support.

Le matériau poreux est ainsi disposé sous au moins une desdites électrodes et le support de façon à isoler électriquement ladite au moins une desdites électrodes du support.

Une telle disposition du matériau poreux donné permet d'obtenir une meilleure isolation électrique par rapport au support et d'améliorer ainsi la sensibilité du capteur.

Le matériau poreux donné permet de faire varier une capacité en fonction d'une quantité de liquide ou de gaz adsorbée, tout en participant à l'isolation de la capacité par rapport au support.

Selon une possibilité de mise en œuvre, le capteur peut être agencé de sorte que la première électrode et la deuxième électrode sont disposées dans ledit matériau poreux.

Selon une possibilité de mise en œuvre, le capteur peut être agencé de sorte que la première électrode est dotée d'au moins une branche conductrice située entre deux branches conductrices de la deuxième électrode.

Ces branches conductrices peuvent être situées dans un même plan parallèle au support.

La première électrode et la deuxième électrode peuvent être sous forme de peignes ayant des branches interdigitées.

Selon une autre possibilité de mise en œuvre, la première électrode et/ou la deuxième électrode peuvent être entourées par, et en contact avec, une ou plusieurs couches de matériau diélectrique poreux.

Selon un agencement particulier, des couches de matériau diélectrique poreux peuvent être disposées sur ledit matériau poreux donné.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- les figures 1A et 1B, illustrent un exemple d'agencement d'un capteur capacitif susceptible d'être mis en œuvre à l'aide d'un procédé suivant l'invention, et comportant un matériau poreux dans lequel des dents de peignes d'électrodes sont disposées, le matériau poreux étant également réparti entre un substrat semi-conducteur sur lequel le capteur est formé et les électrodes de ce capteur,
- les figures 2A à 2E, illustrent un exemple de procédé, suivant l'invention, de réalisation d'un capteur d'humidité de type capacitif comportant un matériau poreux,
- la figure 3, illustre une variante de réalisation d'un capteur d'humidité de type capacitif comportant un matériau diélectrique poreux enrobant une portion des électrodes, un autre matériau poreux étant disposé entre le matériau diélectrique poreux et le substrat sur lequel le capteur est formé,
- la figure 4, illustre une autre variante de réalisation d'un exemple de capteur de type capacitif comportant un matériau diélectrique poreux enrobant une portion des électrodes et en contact avec le substrat sur lequel le capteur est formé,

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

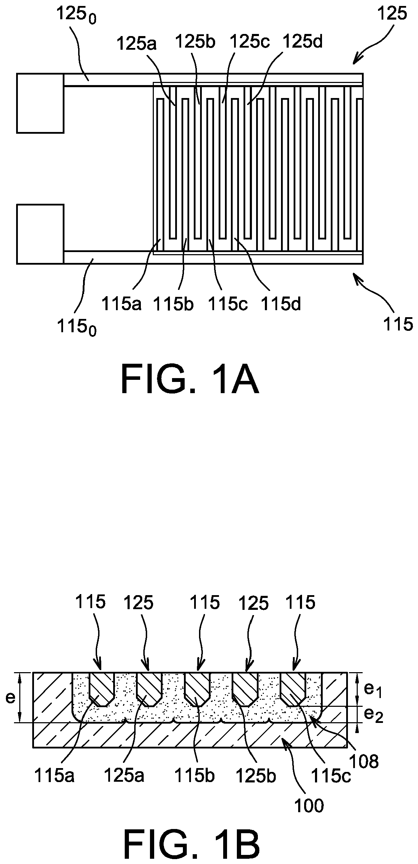

Un exemple de capteur capacitif est donné sur les figures 1A-1B.

Le capteur est formé sur un support 100, qui peut être un substrat à base de matériau semi-conducteur, par exemple un substrat massif en Silicium.

Le capteur comprend des électrodes 115, 125 d'une capacité.

Une première électrode 115 peut être dotée d'une branche conductrice dite « principale » 115₀ qui s'étend dans une direction donnée parallèlement au support 100, et de branches conductrices 115a, 115b, 115c, 115d, dites « secondaires » reliées à la branche principale 115₀ et qui s'étendent dans une direction donnée orthogonale à celle de la branche principale et parallèle au support 100.

Une deuxième électrode 125 peut être également dotée d'une branche conductrice principale 125₀ qui s'étend dans une direction donnée parallèlement au support 100, et de branches conductrices 125a, 125b, 125c, secondaires reliées à la branche principale et qui s'étendent dans une direction donnée orthogonale à la branche principale et parallèle au support 100.

Les électrodes 115, 125 peuvent comprendre ainsi chacune un motif en forme de peigne.

Sur la figure 1A, les électrodes 115, 125 sont représentées en vue de dessus et sous forme de peignes interdigités.

Ainsi, les électrodes 115 et 125 sont disposées de sorte qu'au moins une branche conductrice 125a secondaire d'une des électrodes est située dans un même plan parallèle au support, entre deux branches conductrices 115a, 115b secondaires de l'autre électrode.

Les électrodes 115, 125 sont disposées dans une zone de matériau poreux 108 d'épaisseur e=e₁+e₂ comprise par exemple entre 1 µm et 5 µm.

L'épaisseur e₁ de matériau poreux entre les électrodes, correspondant à une hauteur (mesurée dans une direction orthogonale au plan du support) de matériau poreux disposé entre les électrodes peut être prévue par exemple de 4 µm, de préférence entre 1 µm et 5 µm.

De même l'épaisseur e₂ de matériau poreux entre le support et au moins une des électrodes peut être prévue par exemple d'au moins 1 µm, de préférence entre 0,5 µm et 5 µm.

Une épaisseur importante de matériau poreux disposée entre les électrodes ainsi qu'entre les électrodes et le support participe à une amélioration de la sensibilité du capteur.

Le matériau poreux 108 est disposé entre les électrodes 115 et 125, et sépare les électrodes 115, 125 du substrat. Il peut ainsi jouer à la fois le rôle de diélectrique pour la capacité du capteur et d'isolant électrique entre les électrodes 115, 125 et le substrat 100.

Selon une possibilité de mise en œuvre, le matériau poreux 108 peut être à base du matériau du substrat 100 que l'on a rendu poreux. Le matériau poreux 108 peut être par exemple du Si poreux lorsque le substrat 100 est un substrat en silicium massif.

Le matériau poreux 108 peut comporter des pores de faible diamètre par exemple compris entre 2 nm et 100 nm. Cela permet de détecter de faibles quantités d'humidité ou de gaz.

Le matériau poreux 108 poreux peut être prévu avec une porosité ouverte comprise par exemple entre 20 % et 60 % et de préférence supérieure à 30 %. Cela permet d'obtenir une surface développée importante et de fixer un nombre important de molécules d'eau à faible humidité.

Le matériau poreux 108 peut également comprendre ou éventuellement être à base d'un matériau diélectrique poreux.

Selon une application particulière du capteur capacitif, ce dernier peut être intégré à un dispositif de détection d'humidité ou de mesure d'une quantité d'humidité.

Dans ce cas, le matériau poreux 108 peut comporter des sites hydrophiles. Lorsque l'humidité varie dans l'atmosphère environnant la capacité, la permittivité de la couche de matériau poreux qui adsorbe l'humidité est modifiée proportionnellement à la quantité d'eau adsorbée. Cette variation peut être importante même à faible humidité dans la mesure où la permittivité diélectrique de l'eau est très supérieure à celle du matériau poreux envisagé. La permittivité diélectrique ε du matériau poreux 108 peut être, par exemple, de l'ordre de 12 lorsque le matériau poreux 108 est du Si, tandis que la permittivité diélectrique ε de l'eau est de l'ordre de 80.

Le capteur peut être adapté à des mesures de taux d'humidité allant de 0 à 20 % HR et ayant une importante sensibilité pour des faibles niveaux d'humidité, par exemple entre 0 et 10 % HR.

Selon une autre possibilité d'application particulière du capteur capacitif, ce dernier peut être intégré à un dispositif de détection d'un gaz ou une mesure d'une quantité d'un gaz. Dans ce cas, le matériau poreux 108 peut être fonctionnalisé.

Par exemple, pour détecter du CO₂, on fonctionnalise le matériau poreux avec un composé de type poly(allilamine) de formule : [CH2CH(CH2NH2)]n).

Pour détecter du NO₂, on recouvre par exemple le matériau poreux de ITO (Indium Thin Oxide).

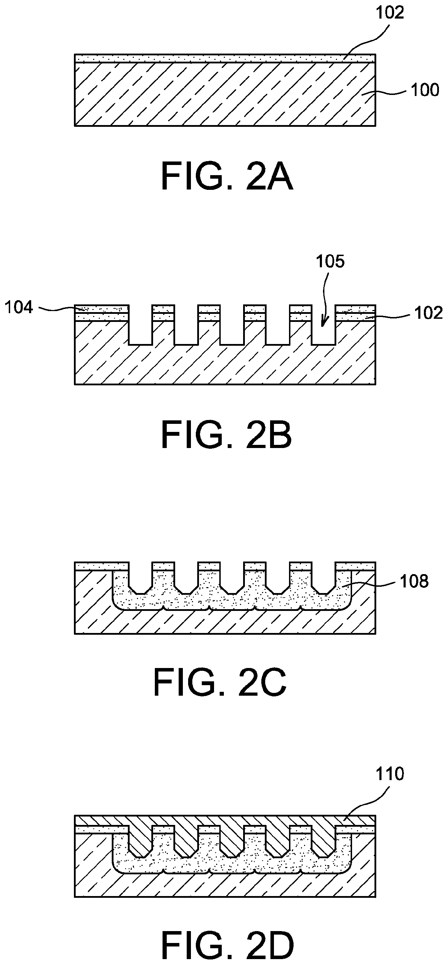

Un exemple de procédé suivant l'invention de réalisation d'un capteur capacitif du type de celui qui vient d'être décrit, va à présent être donné en liaison avec les figures 2A à 2E.

Le matériau de départ de ce procédé peut être un support ou une plaque (« wafer » selon la terminologie anglo-saxonne) de matériau semi-conducteur, par exemple un substrat 100 de Si et d'épaisseur par exemple de l'ordre de 725 µm, qui peut comporter une face avant polie (figure 2A).

Ensuite, on forme une couche de protection 102 sur une face du substrat 100. Cette couche de protection 102 est prévue pour protéger des zones du substrat qu'elle recouvre lors d'une étape ultérieure de porosification.

La couche de protection 102 peut être en particulier à base d'un matériau susceptible de résister à une attaque chimique à base de HF. La couche de protection 102, peut être ainsi par exemple à base de Si₃N₄ et avoir une épaisseur par exemple de l'ordre de 30 nm. La couche de protection 102 peut, en variante, être réalisée par oxydation du support 100, de manière à former une couche d'oxyde de silicium TeOS, puis par dépôt d'une couche de Si₃N₄ sur la couche de TeOS (figure 2B).

On réalise ensuite des tranchées 105 dans le substrat 100 qui traversent la couche de protection 102. Pour cela, une gravure de la couche de protection 102 à travers un masquage 104 comportant des ouvertures peut être réalisée.

On reproduit ainsi les ouvertures dans la couche de protection 102. Le masquage 104 mis en œuvre peut être par exemple à base de résine photosensible.

Ensuite, le substrat 100 est gravé en se servant de la couche de protection 102 comme d'un masque dur. Les tranchées 105 formées dans le substrat 100 peuvent avoir une profondeur par exemple comprise entre 1 µm et 5 µm (figure 2B).

Pour certaines applications, les tranchées peuvent être plus profondes et par exemple de l'ordre de 20 µm.

Le masquage de résine 104 est ensuite retiré.

La réalisation de tranchées verticales peut comprendre une ou plusieurs étape(s) de gravure à l'aide de SF₆ suivies d'étape(s) à l'aide de C₄F₈ pour réaliser une passivation des parois et du fond des tranchées. Après gravure, une étape d'élimination du C₄F₈ des parois et du fond des tranchées peut être mise en œuvre. Cette étape d'élimination peut être réalisée par exemple à l'aide d'un plasma O₂ et d'un recuit sous oxygène à 400 °C. Puis, on procède à une désoxydation de surface, par exemple à l'aide de HF par exemple à 1% ou 5 % afin d'enlever une épaisseur d'oxyde formée et susceptible de contenir des résidus de C₄F₈.

Après ce traitement, la surface des flancs et du fond des tranchées obtenue est décontaminée.

Un ou plusieurs autres cycles supplémentaires d'élimination puis de désoxydation peuvent être éventuellement réalisés afin d'obtenir une décontamination totale du matériau du substrat 100 dévoilé par les tranchées.

On effectue, ensuite une porosification du matériau du support au niveau des parois et du fond des tranchées 105. Le matériau du substrat 100 peut être ainsi rendu poreux dans une zone jouxtant ou limitrophe aux tranchées (figure 2C).

Cette porosification peut être réalisée par voie électrochimique, et plus précisément par dissolution anodique en milieu acide fluorhydrique, en particulier lorsque le substrat 100 est à base de Si. Pour cela, on peut immerger le substrat 100 dans un milieu d'acide fluorhydrique de concentration pouvant varier par exemple entre 1 % et 50%.

Lors d'un tel procédé, les zones de la face du substrat 100 dévoilées par les ouvertures réalisées dans la couche de protection 102 sont consommées au fur et à mesure de l'anodisation tandis que l'autre face du substrat 100 sert de prise de contact pour des moyens de polarisation. L'épaisseur de matériau poreux 108 formée peut être par exemple comprise entre 1 µm et 3 µm.

On rend ainsi poreux le matériau du support situé au fond et au niveau des parois des tranchées une fois seulement que ces dernières ont été réalisées.

La gravure dans un matériau non poreux permet de mieux définir les tranchées, tandis qu'en réalisant la porosification après avoir formé les tranchées, on évite une contamination des pores avec les produits utilisé pour la gravure ou la désoxydation, et en particulier avec le C₄F₈ qui a des propriétés hydrophobes.

On obtient ainsi un matériau poreux sans contaminant et de meilleure qualité.

Ensuite, on forme des électrodes pour le capteur.

Pour cela, on effectue tout d'abord un dépôt d'un matériau conducteur 110 dans les tranchées 105 (figure 2D). Le matériau conducteur 110 peut être un matériau métallique tel que de l'AICu. Le dépôt peut être réalisé par exemple par PECVD (PECVD pour « plasma enhanced chemical vapour deposition », ou dépôt chimique en phase vapeur assisté par plasma).

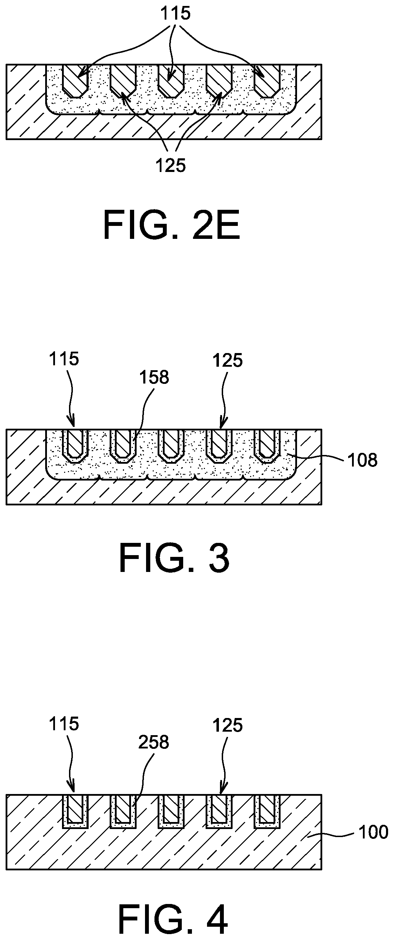

Puis, pour retirer des régions de matériau conducteur 110 dépassant de l'embouchure des tranchées, on peut effectuer une planarisation ou un polissage, par exemple par CMP (CMP pour « chemical mechanical polishing »), afin de former des électrodes 115, 125. La couche 102 qui a jouée le rôle de masque de protection lors de la porosification peut avantageusement servir en outre de couche d'arrêt au polissage du matériau conducteur 102. Cette couche 102 peut être ensuite retirée (figure 2E).

Un traitement pour rendre hydrophile le matériau poreux 108 peut être réalisé, en particulier lorsque le capteur est destiné à remplir le rôle de capteur d'humidité. Ce traitement peut être réalisé par exemple à l'aide de H₂O₂. Le traitement pour rendre hydrophile le matériau poreux 108 peut être réalisé, en particulier lorsque le capteur est destiné à remplir le rôle de capteur d'humidité.

Ce traitement peut être réalisé entre l'étape de porosification et préalablement à l'étape de remplissage des tranchées 105 par le matériau conducteur 110 ou bien après retrait des couches 110 et 102 par CMP

Selon une variante du procédé de réalisation du capteur, une étape de fonctionnalisation du matériau poreux 108, en particulier au niveau des parois des tranchées 105 peut être effectuée, notamment lorsque le capteur est destiné à remplir le rôle de capteur de gaz.

Cette fonctionnalisation peut être réalisée par exemple après l'étape de porosification et préalablement à l'étape de remplissage des tranchées 105 par le matériau conducteur 110. Par exemple, pour détecter du CO₂, on peut fonctionnaliser le matériau poreux avec un composé de type poly(allilamine) (de formule chimique : [CH₂CH(CH₂NH₂)]ₙ). Pour détecter du NO₂, on recouvre par exemple le matériau poreux d'ITO (Indium Tin Oxide).

Selon une variante de réalisation du capteur illustrée sur la figure 3, après avoir réalisé la porosification, on peut recouvrir les parois des tranchées par une ou plusieurs couches de matériau diélectrique poreux 158, par exemple de type SiOCH ou MSQ.

Selon une autre variante de réalisation du capteur illustrée sur la figure 4, après avoir réalisé les tranchées 105, on peut réaliser l'étape de porosification de manière à former des zones de matériau diélectrique poreux 258 au niveau des parois et du fond des tranchées 105 et qui ne sont pas en contact entre elles..

Le matériau diélectrique 258 peut être un matériau susceptible d'adsorber les molécules d'eau lorsque le capteur est prévu pour une détection d'humidité ou un matériau poreux spécifique dédié à une détection de gaz particuliers tels que du CO, du CO₂, du NO₂, du CH₄.

Puis, on comble les tranchées 105 de matériau conducteur de manière à former les électrodes 115 et 125. Pour cette variante, un matériau diélectrique poreux 258 situé autour et en contact d'une des électrodes 115, 125 est agencé de manière isoler les électrodes 115 et 125 entre elles et à isoler les électrodes 115, 125 du substrat 100. Dans cet exemple, les zones 258 de matériau diélectrique poreux et les électrodes enrobées par ces zones 258 sont séparées entre elles par des régions du substrat 100.

Un tel mode de réalisation peut être prévu dans les cas où le matériau diélectrique poreux des zones 258 est déposé par voix chimique, par exemple en PECVD ou bien dans un cas où l'épaisseur de matériau poreux formé par voie électrochimique est faible.

Pour cette variante, l'épaisseur de matériau poreux tapissant les parois et le fond des tranchées peut être prévue épaisse et de préférence au moins égale à 2 µm pour permettre une diffusion de gaz ou de vapeur d'eau dans ledit matériau poreux.

Un exemple particulier détaillé de réalisation d'un capteur capacitif va à présent être donné.

Dans cet exemple, le capteur est prévu avec une capacité théorique à 0 % d'humidité relative (HR) de 45 pf, et doté d'un nombre de branches conductrices secondaires 115a, 115b, 115c, 115d, 125a, 125b, 125c, de l'ordre de 150.

Les branches secondaires ont une longueur de l'ordre de 1000 µm, une épaisseur de l'ordre de 3 µm, et sont séparées l'une de l'autre d'une distance de l'ordre de 1.2 µm.

Dans cet exemple, le matériau poreux 108 est du Si et a une épaisseur de l'ordre de 3 µm, une permittivité de l'ordre de 12, et une porosité ouverte de l'ordre de 35 %.

Les applications d'un capteur suivant l'invention sont multiples.

Parmi ces applications, on peut citer, outre la détection d'humidité dans des composants scellés, la mesure de l'humidité dans l'industrie de la céramique pour le contrôle du séchage des pièces avant cuisson, la mesure de l'humidité dans les papeteries, la mesure de l'humidité dans l'industrie alimentaire, dans les serres, dans l'industrie électronique pour le contrôle des salles blanches, dans les hôpitaux, dans les habitacles automobiles.

Un capteur suivant l'invention peut être également utilisé pour les mesures de traces d'eau dans les gaz produits à grande échelle dans un site industriel par exemple au niveau de sites d'extractions.

Un capteur suivant l'invention peut être également utilisé au sein d'un dispositif de contrôle des gaz par exemple dans un site industriel où l'humidité est prohibée notamment dans les procédés de synthèses de matériaux purs tels que des produits pharmaceutiques ou par exemple dans des sites de fabrication de polymères.

Un capteur suivant l'invention peut être également utilisé pour la détection de fuites dans les composants encapsulés dans les industries de la micro électronique et des microsystèmes de type accéléromètre, gyromètre ou capteurs de pression qui sont protégés par un capot.

## Revendications

1. Procédé de réalisation d'un capteur capacitif, comprenant, dans cet ordre, des étapes consistant à :
- former dans un support (100) à base d'au moins un matériau donné des tranchées (105) par gravure dudit au moins un matériau donné,
- rendre poreux ledit matériau donné au niveau des parois et du fond des tranchées,
- remplir les tranchées (105) à l'aide d'un matériau conducteur (110).

2. Procédé selon la revendication 1, dans lequel les tranchées sont réalisées à travers un masquage de protection (102), le procédé comprenant en outre après l'étape de remplissage des tranchées, le retrait par planarisation de zones dudit matériau conducteur (110) dépassant de l'embouchure des tranchées.

3. Procédé selon l'une des revendications 1 ou 2, comprenant en outre une étape de traitement pour rendre le matériau donné poreux hydrophile.

4. Procédé selon l'une des revendications 1 à 3, comprenant en outre une étape de fonctionnalisation du matériau poreux.

5. Procédé selon l'une des revendications 1 à 4, dans lequel le support est un substrat à base silicium.

6. Procédé de réalisation d'un capteur capacitif selon l'une des revendications 1 à 5, comprenant après l'étape consistant à rendre poreux le matériau donné et préalablement à l'étape consistant à remplir les tranchées : déposer un matériau diélectrique dans lesdites tranchées.

7. Procédé de réalisation d'un capteur capacitif selon l'une des revendications 1 à 6, dans lequel la réalisation des tranchées comprend une alternance de phases de gravure avec du SF₆ et de phases de passivation à l'aide de C₄F₈ suivies d'une ou plusieurs étapes de traitement à l'aide d'un plasma O₂.

## Patentansprüche

1. Verfahren zum Herstellen eines kapazitiven Sensors, umfassend in dieser Reihenfolge die folgenden Schritte:
- Bilden von Gräben (105) in einem Träger (100) auf Basis von zumindest einem vorgegebenen Material durch Ätzen des zumindest einen vorgegebenen Materials,
- Porösmachen des vorgegebenen Materials an den Wänden und am Boden der Gräben,
- Füllen der Gräben (105) mittels eines leitfähigen Materials (110).

2. Verfahren nach Anspruch 1,
wobei
die Gräben durch eine Schutzmaskierung (102) hindurch hergestellt werden, wobei das Verfahren ferner nach dem Schritt des Füllens der Gräben das Entfernen von Bereichen des leitfähigen Materials (110), die aus der Grabenmündung herausragen, durch Planarisierung umfasst.

3. Verfahren nach einem der Ansprüche 1 oder 2, ferner umfassend einen Behandlungsschritt, um das vorgegebene poröse Material hydrophil zu machen.

4. Verfahren nach einem der Ansprüche 1 bis 3, ferner umfassend einen Schritt des Funktionalisierens des porösen Materials.

5. Verfahren nach einem der Ansprüche 1 bis 4,
wobei
der Träger ein Substrat auf Basis von Silicium ist.

6. Verfahren zum Herstellen eines kapazitiven Sensors nach einem der Ansprüche 1 bis 5, umfassend nach dem Schritt des Porösmachens des vorgegebenen Materials und vor dem Schritt des Füllens der Gräben: Abscheiden eines dielektrischen Materials in den Gräben.

7. Verfahren zum Herstellen eines kapazitiven Sensors nach einem der Ansprüche 1 bis 6,
wobei
das Herstellen der Gräben eine Wechselfolge von Ätzphasen mit SF₆ und von Passivierungsphasen mittels C₄F₈, gefolgt von einem oder mehreren Behandlungsschritten mittels eines O₂-Plasmas, umfasst.

## Claims

1. A method for producing a capacitive sensor, comprising, in this order, steps of:
- forming trenches (105) in a carrier (100) based at least on one given material by etching said at least one given material,
- making said given material porous at the walls and the bottom of the trenches,
- filling the trenches (105) using a conducting material (110).

2. The method according to claim 1, wherein the trenches are made through a protective masking (102), the method further comprising, after the step of filling the trenches, the removal by planarization of areas of said conducting material (110) protruding from the mouth of the trenches.

3. The method according to one of claims 1 or 2, further comprising a step of treatment to make the given porous material hydrophilic.

4. The method according to one of claims 1 to 3, further comprising a step of functionalizing the porous material.

5. The method according to one of claims 1 to 4, wherein the carrier is a silicon-base substrate.

6. The method for producing a capacitive sensor according to one of claims 1 to 5, comprising after the step of making the given material porous, and prior to the step of filling the trenches: depositing a dielectric material in said trenches.

7. The method for producing a capacitive sensor according to one of claims 1 to 6, wherein forming the trenches comprises alternating etching phases with SF₆ and passivation phases using C₄F₈ followed by one or several steps of treatment using O₂ plasma.
